# EUROPEAN PATENT SPECIFICATION

(11) **EP 2 081 798 B1**
(45) Date of publication and mention of the grant of the patent: **28.12.2011**
(21) Application number: 07838655.4
(22) Date of filing: 21.09.2007
(51) Int. Cl.: B60R 21/213, B60R 21/20, F16B 5/06, F16B 2/24

(54) **AIRBAG ASSEMBLY MOUNTING SYSTEM**
MONTAGESYSTEM FÜR EINE AIRBAG-ANORDNUNG
SYSTEME DE MONTAGE D'UN ENSEMBLE AIRBAG

(30) Priority: 09.10.2006 US 828679 P
(43) Date of publication of application: 29.07.2009
(73) Proprietor: Key Safety Systems, Inc., Sterling Heights, MI 48313 (US)
(72) Inventor: VOLKMANN, Matthias, 61476 Kronberg (DE); HOFMANN, Volker, 60389 Frankfurt (DE)
(74) Representative: Gislon, Gabriele
(86) International application number: PCT/US2007/020497
(87) International publication number: WO 2008/045195

(56) References cited:
- EP-A2- 1 584 521
- DE-U1-202004 014 219
- US-A1- 2005 217 083
- US-A1- 2006 197 316
- US-B2- 6 991 255
- US-B2- 7 083 188

## Description

The present invention relates to a fastener for fastening an airbag such as a curtain airbag to a structural member of a vehicle such as the vehicle's roof rail.

In prior art EP 1584521A2 there is disclosed an airbag assembly mounting system comprising: a fastener having a base plate with a front side and a rear side, a resilient expansion element along the rear side of the base plate which is configured to extend through a passageway in a structural member in a vehicle and through a portion of an airbag or an airbag cover, so as to clamp the airbag or airbag cover to the structural member between the rear side of the base plate and the structural member with the resilient expansion element on an opposite side of the structural member, the resilient expansion element comprising two opposing resilient clips each having an inner leg extending from the base plate and an outer leg resiliently supported by and configured as an extension of the inner leg, the outer leg, at a distal end, including an engagement surface adapted to engage an edge of the passageway in the structural member, each engagement surface of each outer leg configured to move closer to each other during assembly of the fastener to the structural member to a reduced dimension enabling insertion of the fastener into the passageway in the structural member and to assume a released position wider than the passageway in the structural member upon insertion therein as described in the preamble of claim 1.

A fastener for securing an airbag in a removable manner, which is part of an assembly, to a structural member of a vehicle such as the vehicle's roof rail or seat frame is an object of the invention according to claim 1 as disclosed herein. The fastener comprises a base plate with a front side and a rear side. The rear side acts as a stop surface. The fastener has a resilient snap-in member. Each fastener has two opposing and co-acting resilient expansion elements, also referred to as clips, which extend from the rear side and are designed to clamp to a structural member such as a thin plate or plate-like structure of a structural member; when clamped the thin plate is between the stop or clamping surface and the base plate of the fastener. The airbag is located between a rear side of the base plate and the structural member. The clip portion of the fastener extends through a passageway in a tab or border portion of the airbag. While the new fastener is used to fasten the airbag to the vehicle, it can be used to secure components other than airbags to various structural members. The invention optionally includes a tool used to displace each resilient clip to a configuration permitting removal of the fastener from the structural member, Once removed from the structural member, the fastener can be used again as it is not damaged during removal.
Figure 1A is a front view of a tab of a prior art curtain airbag usable with the new fastener.
Figure 1B is a front view of a typical passageway in the structural member in which the new fastener is inserted.
Figure 2A is a rear isometric view of the new fastener.
Figure 2B is a front isometric view of the fastener.
Figure 2C is a front view of the fastener.
Figure 2D is a top, or bottom, view of the fastener.
Figure 2E is a right side view, or left side, view of the fastener.
Figure 2F is a back view of the fastener.
Figure 3 shows the fastener displaced from a structural member and aligned with a fastener-receiving passageway in the roof rail.
Figures 4A and 4B show the fastener positioned through a passageway in the tab of the airbag and mounted to the roof rail of a vehicle.
Figures 5A and 5B show a curtain airbag mounted to a structural member of a vehicle.
Figure 6 shows a removal tool that can be used with the new fastener.
Figure 7A is a cross-sectional view of the fastener.
Figure 7B diagrammatically shows the removal tool in the fastener prior to removal of the fastener from a structural member.

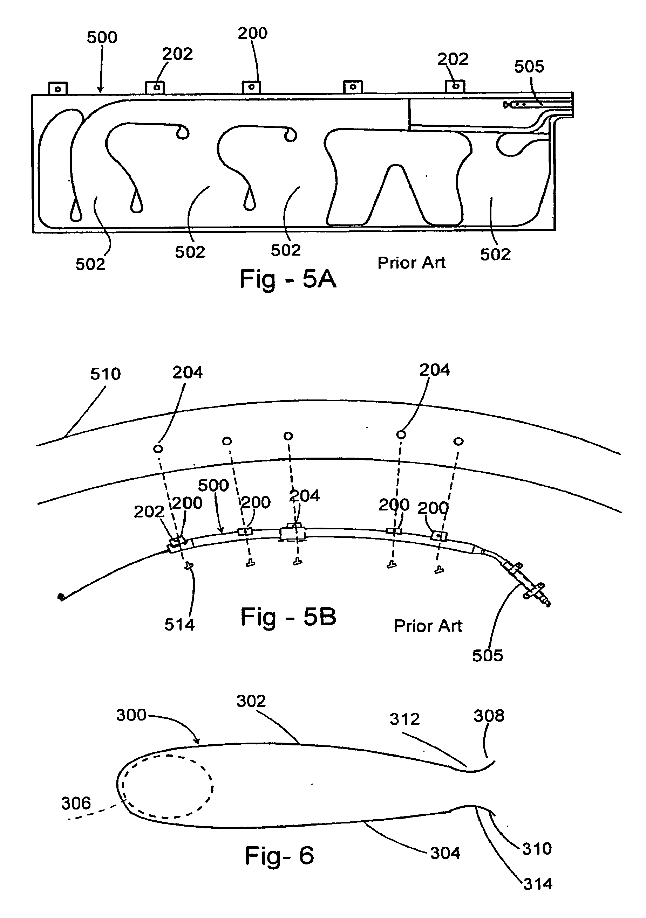

Figures 5A and 5B diagrammatically illustrate a typical curtain airbag 500 having one or more inflatable chambers 502. The airbag has a plurality of tabs 200, each of which has a fastener receiving passageway 202 for receipt of the fastener 514 used to secure the curtain airbag to the vehicle's roof rail. An inflator 505 is included in the airbag assembly. Figure 5B diagrammatically illustrates an airbag 500 in a rolled or folded configuration prior to being secured to the vehicle roof rail 510. The roof rail has a plurality of equally spaced fastener receiving passageways 204. Fasteners 514 are inserted through corresponding fastener passageways 202 in the tabs 200 and through a passageway 204. The tab 200 can be positioned above the main portion of the airbag that has been folded, or under the folded portion of the airbag. If the tabs are installed under the folded portion of the airbag after insertion of the fasteners to the structural member, the folded portion of the airbag falls down and covers the fasteners and tabs. If the airbag is mounted to the structural member with the tabs positioned above the folder portion of the airbag and the fasteners inserted into the tabs, the folded portion of the airbag remains below the tabs and fasteners.

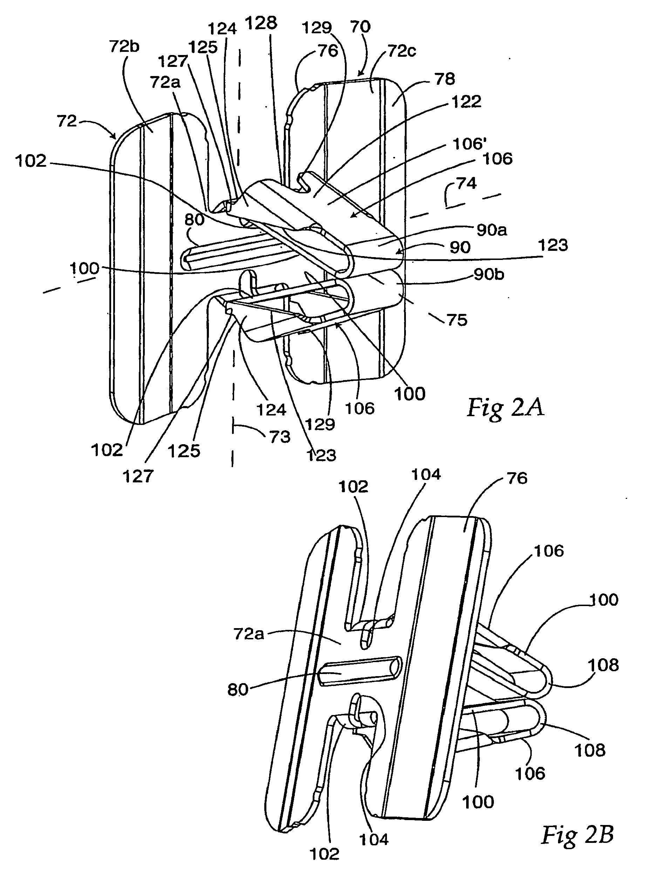

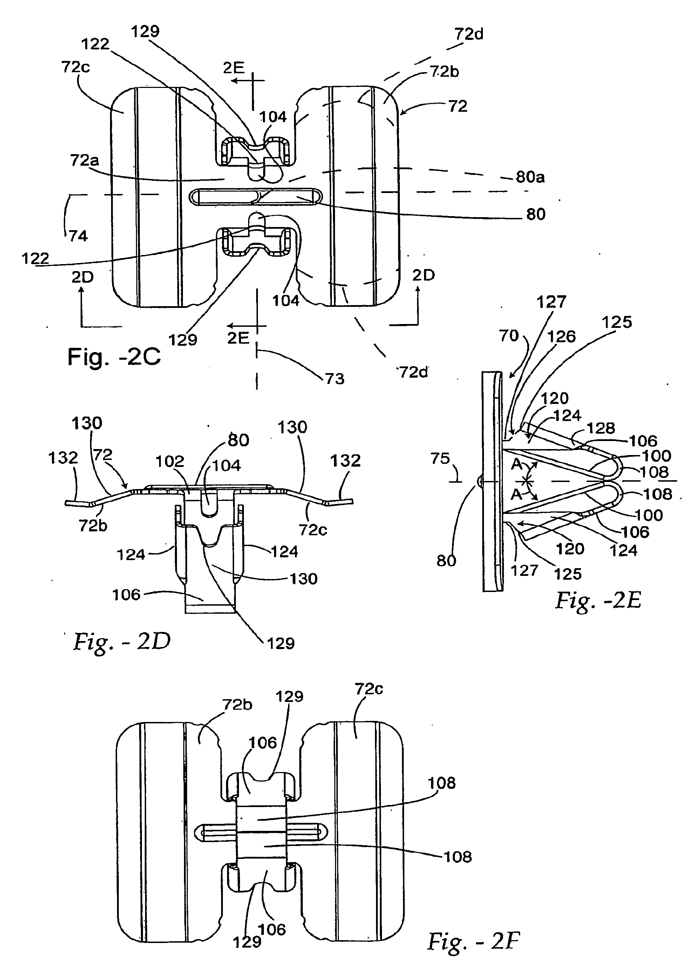

Figures 2A-2F are various views of a fastener 70. The fastener 70 comprises a base plate or member 72 having a center portion 72a and lateral wings or sections 72b, 72c. Each lateral section is bent or bendable relative to the center portion, as shown in Figure 2D, to provide a degree of
added resiliency to these lateral sections enabling these sections to flex when the fastener is mounted to a structural member to enable a good and sufficient clamping action so that airbag 500 is secured to the structural member. The illustrated fastener is symmetrical about a centerline or vertical axis 73, as well as about a horizontal axis 74. Each clip is arranged along another axis 75 disposed generally 90° to the vertical and horizontal axes 73, 74. The plate or member 72 has a front side 76 and a rear side 78. In the installed position the front side faces the passenger compartment of the vehicle when the product, such as an airbag, is installed at the roof rail.

The front side may include a strengthening rib 80, which can be stamped or integrally formed thereon. Preferably the fastener is a one-piece metal stamping, or integrally molded or cast using metal or plastic. The strengthening rib 80 is formed on the center portion 72a. Each lateral section or wing 72b, 72c is pre-bent or partially folded about first and second bend lines or features 131, 133 resulting in a first bent or flared portion 130 extending from one bend line or feature 133 to the other bend line or feature 131 and a second bent or flared portion 132 extending outwardly beyond bend line 131. Each lateral section is configured to bend about the fold or bend features 131, 133. The rib 80 stiffens the center portion 72, which encourages the flared portions 130, 132 to flex at the bend features 131, 133. In Figure 2C reference numeral 80a identifies a phantom arc to illustrate that the rib need not be symmetrically placed along the back of the fastener and can be offset relative to the vertical and horizontal axes 73, 74. Placing the rib 80a in an offset manner increases the relative stiffness of the fastener along the horizontal axis 74. Phantom lines 72d show that the wings 72b, 72c need not be the same size.

Extending from the rear side 78 of the base plate or member 72 is a resilient snap-in member 90 comprising two symmetrically placed and constructed expansion elements, clips or clamps 90a, 90b. Each clip 90a, 90b is integrally formed with the base plate or member 72. Each clip 90a, 90b includes an inner leg 100 that extends away from the center portion 72a of the base plate or member 72 along another axis 75 disposed generally 90° to the vertical and horizontal axes 73, 74. The root or base region 102 of each inner leg 100 is formed as a bent-over part of the inner leg, which in essence was separated from the center portion 72a when the fastener was stamped. The root 102 has a passageway 104, which facilitates the bending-over of the inner leg 100 and use of a removal tool 300 as discussed below. Each clip 90a, 90b includes an outer leg 106 resiliently extending and oppositely directed from the inner leg via a curved corner 108 formed in part by the inner and outer legs. The outer leg 106 can be considered as an extension of the inner leg 100.

Figure 2E illustrates the positional relationship between the two clips 90a, 90b of a single fastener 70. Each of the inner legs 100 is angled inwardly from the base plate relative to an axis, or plane, 110 at an angle designated A or -A. Each of the clips together form a V-shape with the respective corners 108 touching or very closely spaced apart. In the rest position for each outer leg 108, that is, with each outer leg in an unstressed condition, each outer leg is positioned substantially parallel to its corresponding inner leg 100 and at approximately the same angle A, or -A, relative to the axis 75 disposed generally 90° to the vertical and horizontal axes 73, 74. In practice the angle A will vary In proportion to the insertion force desired or required. Preferably the angle A is about 19°.

Figures 2A and 2E illustrate other features of each outer leg 106. The end region 120 of each outer leg is wedge-shaped when viewed in profile from a side. The end region 120 of each outer leg includes an engagement surface or end 122 and two opposing triangularly shaped extensions 124, which are identical in shape and are bent downwardly to form the wedge shape of the end region 120. Each of the triangularly shaped extensions 124 has a lower edge 123, which is generally perpendicular to the center portion of the fastener, and an upper ramped or wedge portion 125, which transitions into a blunt end or stop feature 127. Each triangularly shaped extension 124 permits the end region 120 to have a wider profile 126 in the end region of each outer leg than the profile at an inner or narrower section 128, as shown in Figures 2A and 2D. This wide profile or surface assists in forming the stop feature of the fastener, which acts as a clamping surface.

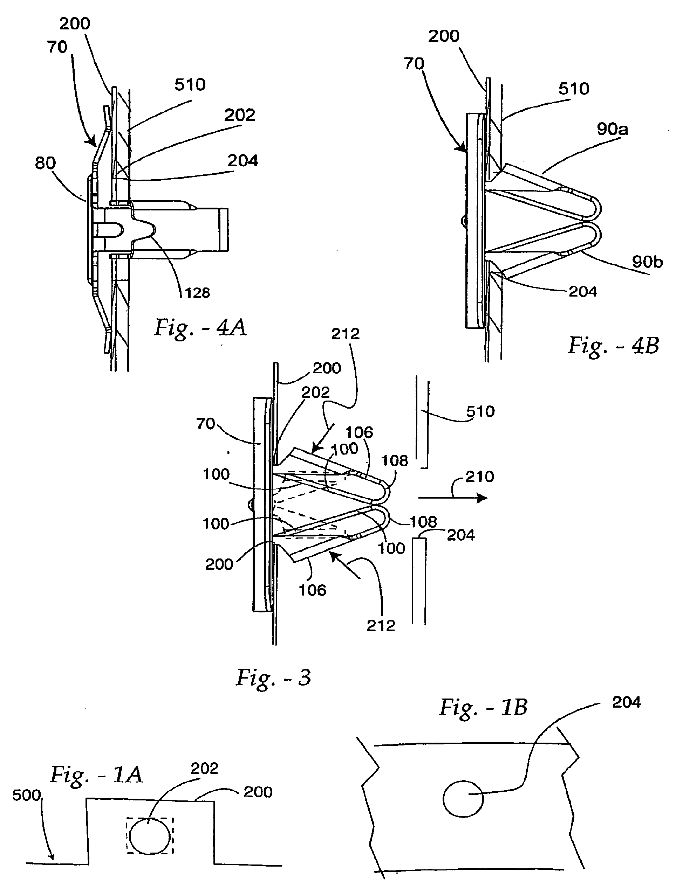

In Figure 2A, when each triangularly shaped extension 124 is bent downwardly, they are positioned generally perpendicular to a center portion-top 106' of each outer leg 108 and when inserted into a hole in the structural member are squeezed together to over-travel or move past relative to a respective inner leg 100. The blunt end or stop feature 127 is received outside of the mouth of the material forming the passageway 204 and prevents the clamps or wings 90a. 90b from spreading apart when a pulling force is applied to the fastener 70 in a direction opposite to an arrow 210 in Figure 3. With the fastener is engaged the end or stop feature is orientated generally parallel to the structural member. The ramped portion 125 of each end region 120 has an effective wider diameter than the blunt end 127 and permits the fastener to engage with a larger sized hole 204 in the structural member of the structural member, that is, if the hole has a diameter greater than the spacing between the two blunt ends 127. Each end region has a generally oblong or oval passageway such as a V-shaped passageway or groove 129 that provides a space, in cooperation with the passageway 104, to permit entry of one of the tips 308, 310 of a disassembly tool 300 so that each tip can be manipulated behind or on the top of a respective outer leg 106 in a position to apply a clamping or inwardly directed force to that leg 106.

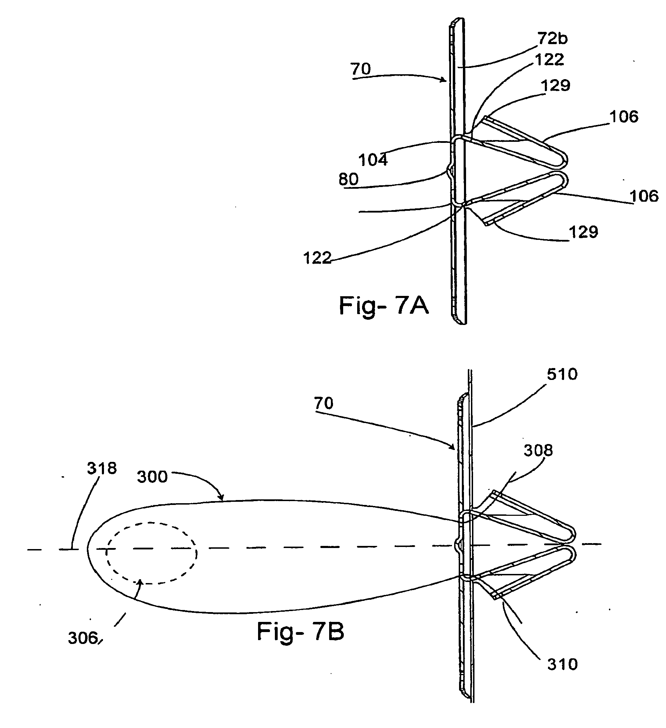

The removal tool 300 in Figures 6 and 7B has a resilient, spring-like body with two extending legs 302, 304. The tool is preferably formed of a resilient metal wire or with a less flexible wire and an optional center coiled spring 306, to enhance the spring constant of the tool. The center colled spring 306 can be integrally formed with the legs or formed as an insert inserted in between the legs of the tool. Each tip 308, 310 of the tool includes a concave section 312, 314 downstream of each tip end. To remove the fastener from the structural member, each tip 308, 310 is placed in a corresponding passageway 128. The tool is pushed into the fastener and the tip ends 308, 310 are inserted into the passageway 104 that is accessible from the front side. The front side is the side facing the passenger compartment. As the tool is pushed further into the fastener each concave section 312, 314 engages a portion or edge 122 of a respective outer leg 106, which forms in inner portion of the passageway 104. The engagement of each concave section with a corresponding section, edge or surface 122 of an outer leg 106 adjacent the passageway 104 permits the concave sections to ride up onto the passageway 129 and then over the end or outer portions of each outer leg as is shown in Figure 7B. Thereafter the tool is twisted about its longitudinal axis 318 causing the concave sections to move closer together, which pinches the outer legs 106 together enabling the removal of the fastener 70.

Figure 3 shows one of fasteners 70 already positioned within a tab 200 of a curtain airbag 500, generally of the shape and construction shown in Figure 5B. Each tab 200 includes a fastener receiving passageway 202 such as a circular or square shaped passageway as shown in Figure 1A. The square shaped passageway is shown in phantom line. Figure 3 shows a fastener 70 spaced apart from the structural member such as the roof rail 510 of a vehicle. The roof rail shown includes another fastener receiving passageway 204, which in Figures 3 and 4B is circular. As the tab of a woven airbag is flexible and exhibits some degree of stretch, the passageway 202 can be smaller than the passageway 204. When each fastener 70 is mounted to the structural member it is positioned relative to a corresponding passageway 204, after the airbag tab 200 has been attached, and moved toward the structural member or structural member, such as the roof rail, until each outer leg 106 engages with the material forming the edge of passageway 204. The deflected position of each clip 90a, 90b is achieved as each clip is compressed, as shown by a phantom line.

Further movement the fastener 70 in the direction of arrow 210 generates compressive forces, indicated by arrows 212 in Figure 3, that act upon each outer leg 106. These forces close any spacing in between the opposing corners 108 of each of the clips 90, 90b and cause each outer leg 106 to rotate or otherwise move inwardly about the corner 108, such that end regions 120 of each clip 90a, 90b move closer to each other. In the limiting position an inner surface of each end region contacts a top surface of a corresponding inner leg. This movement will temporarily reduce the distance between the outer regions of each outer leg 106 to be smaller than the diameter of the passageway 204. The end regions 120 over-travel their respective inner leg 100. Further movement of each clip 70 into the roof rail positions the wider profile 126, the ramp 125, of each outer leg 106 behind the passageway 204 of the roof rail. Each clip 90a, 90b snaps outwardly due to the resilient spring-like action of the legs 106, generally opposite arrows 212, to the position shown in Figures 4A and 4B, clamping the airbag tab to the structural member and preventing removal of the fastener.

In Figures 4A and 4B, the rear side of the base plate, as well as the rear side of the side portions 72b, 72c, acts as a first stop surface or mechanical stop, and the end region 120, profile or surface 127, and/or surface 125, of each outer leg acts as a mechanical stop preventing the withdrawal of the fastener and securing the airbag to the structural member.

A benefit of the new fastener 70 formed with two resilient clips 90a, 90b is that the fastener can be easily removed from the structural member. The demounting or removal of each fastener 70 can be accomplished utilizing an elongated tool 300 as shown in Figure 6 received in the designated passageways in the fastener or, alternatively, by utilizing a screwdriver or a pair of pliers with two thin elongated tips. Examples of suitable tools are screwdrivers, Allen keys or wrenches, and pliers. The tips of the tool are manipulated between the edges of the passageway 204 and the top of each center region 106' of each outer leg 106. The tips are moved at the same time to compress both outer legs 106 so as to compress clips 90a, 90b to profile smaller than the diameter of passageway 204, thereby permitting the withdrawal or removal of the fastener from the structural member. Another benefit is the ability of the outer legs to over-travel the center portion of the leg permitting the fastener to collapse to a small dimension and to enter into a small passageway in the structural member.

## Claims

1. An airbag assembly mounting system comprising: a fastener (70) having a base plate (72) with a front side (76) and a rear side (78), a resilient expansion element (90) along the rear side (78) of the base plate (72) which is configured to extend through a passageway (204) in a structural member (510) in a vehicle and through a portion of an airbag (200) or an airbag cover, so as to clamp the airbag (200) or airbag cover to the structural member (510) between the rear side (78) of the base plate (72) and the structural member (510) with the resilient expansion element (90) on an opposite side of the structural member (510), the resilient expansion element (90) comprising two opposing resilient clips (90a, 90b) each having an inner leg (100) extending from the base plate (72) and an outer leg (106) resiliently supported by and configured as an extension of the inner leg (100), the outer leg (106), at a distal end, including an engagement surface (122) adapted to engage an edge of the passageway (204) in the structural member (510), each engagement surface (122) of each outer leg (106) configured to move closer to each other during assembly of the fastener (70) to the structural member (510) to a reduced dimension enabling insertion of the fastener (70) into the passageway (204) in the structural member (510) and to assume a released position wider than the passageway (204) in the structural member (510) upon insertion therein; **characterized in that**:
each outer leg (106) proximate the engagement surface (122) includes a first passageway (129) to facilitate insertion of a portion of a removal tool (300) in a direction from the front side (76) of the base plate (72) into the structural member (510), the tool (300) being adapted to move the outer legs (106) together.

2. An airbag assembly mounting system according to Claim 1 wherein the passageway (129) in the outer leg (106) is a V-shaped slot, oval or elongated opening.

3. An airbag assembly mounting system according to Claim 1 wherein each outer leg (106) proximate a distal end includes bent-over wedge shaped wings that over-travel a corresponding inner leg (100) during installation of the fastener (70).

4. An airbag assembly mounting system according to Claim 3 wherein the base plate (72) opposite the passageway (129) in the outer leg (106) includes a corresponding second passageway (104) adapted to also receive a portion of the removal tool (300).

5. An airbag assembly mounting system according to Claim 4 wherein the second passageway is located in the base plate (72) and extends through a root portion of a respective inner leg (100).

6. An airbag assembly mounting system according to Claim 4 or Claim 5 wherein the removal tool (300) includes opposing arcuately shaped opposed curved tips (308, 310) receivable into one of the second passageways (104) and then into one of the first passageways (129).

7. An airbag assembly mounting system according to Claim 6 wherein the removal tool (300) is configured so that on rotation about a longitudinal axis the tips (308, 310) move close to each other to compress the outer legs (106) together.

8. An airbag assembly mounting system according to Claim 6 wherein each second passageway (104) is aligned with a first passageway (129).

## Patentansprüche

1. Montagesystem für eine Airbag-Anordnung, das aufweist: ein Befestigungselement (70) mit einer Grundplatte (72) mit einer Vorderseite (76) und einer Hinterseite (78); ein elastisches Expansionselement (90) längs der Hinterseite (78) der Grundplatte (72), das ausgebildet ist, um sich durch einen Durchgang (204) in einem Strukturelement (510) in einem Fahrzeug und durch einen Abschnitt eines Airbags (200) oder einer Airbag-Abdeckung zu erstrecken, um so den Airbag (200) oder die Airbag-Abdeckung am Strukturelement (510) zwischen der Hinterseite (78) der Grundplatte (72) und dem Strukturelement (510) mit dem elastischen Expansionselement (90) auf einer entgegengesetzten Seite des Strukturelementes (510) festzuklemmen, wobei das elastische Expansionselement (90) zwei entgegengesetzte elastische Klemmen (90a, 90b) aufweist, die jeweils einen inneren Schenkel (100), der sich von der Grundplatte (72) aus erstreckt, und einen äußeren Schenkel (106) aufweisen, der elastisch getragen wird von einer und ausgebildet ist als eine Verlängerung des inneren Schenkels (100), wobei der äußere Schenkel (106) an einem distalen Ende eine Eingriffsfläche (122) umfasst, die so ausgebildet ist, dass sie mit einem Rand des Durchganges (204) im Strukturelement (510) in Eingniff kommt, wobei eine jede Eingriffsfläche (122) eines jeden äußeren Schenkels (106) ausgebildet ist, um sich näher zueinander während der Montage des Befestigungselementes (70) am Strukturelement (510) bis zu einer verringerten Abmessung zu bewegen, die das Einsetzen des Befestigungselementes (70) in den Durchgang (204) im Strukturelement (510) ermöglicht, und um eine Freigabeposition, die breiter ist als der Durchgang (204) im Strukturelement (510), beim Einsetzen darin anzunehmen; **dadurch gekennzeichnet, dass**:
ein jeder äußerer Schenkel (106) in unmittelbarer Nähe der Eingriffsfläche (122) einen ersten Durchgang (129) umfasst, um das Einsetzen eines Abschnittes eines Entnahmewerkzeuges (300) in einer Richtung von der Vorderseite (76) der Grundplatte (72) in das Strukturelement (510) zu erleichtern, wobei das Werkzeug (300) ausgebildet ist, um die äußeren Schenkel (106) miteinander zu bewegen.

2. Montagesystem für eine Airbag-Anordnung nach Anspruch 1, bei dem der Durchgang (129) im äußeren Schenkel (106) ein V-förmiger Schlitz, eine ovale oder längliche Öffnung ist.

3. Montagesystem für eine Airbag-Anordnung nach Anspruch 1, bei dem ein jeder äußere Schenkel (106) in unmittelbarer Nähe eines distalen Endes umgebogene keilförmige Flügel umfasst, die sich über einen entsprechenden inneren Schenkel (100) während der Installation des Befestigungselementes (70) bewegen.

4. Montagesystem für eine Airbag-Anordnung nach Anspruch 3, bei dem die Grundplatte (72) entgegengesetzt dem Durchgang (129) im äußeren Schenkel (106) einen entsprechenden zweiten Durchgang (104) umfasst, der ausgebildet ist, um ebenfalls einen Abschnitt des Entnahmewerkzeuges (300) aufzunehmen.

5. Montagesystem für eine Airbag-Anordnung nach Anspruch 4, bei dem der zweite Durchgang in der Grundplatte (72) angeordtnet ist und sich durch einen Fußabschnitt eines jeweiligen inneren Schenkels (100) erstreckt.

6. Montagesystem für eine Airbag-Anordnung nach Anspruch 4 oder Anspruch 5, bei dem das Entnahmewerkzeug (300) entgegengesetzte bogenförmig ausgebildete gegenüberliegende gebogene Enden (308, 310) umfasst, die in einem der zweiten Durchgänge (104) und danach in einem der ersten Durchgänge (129) aufgenommen werden können.

7. Montagesystem für eine Airbag-Anordnung nach Anspruch 6, bei dem das Entnahmewerkzeug (300) so ausgebildet ist, dass sich bei einer Drehung um eine Längsachse die Enden (308, 310) nahe zueinander bewegen, um die äußeren Schenkel (106) zusammenzudrücken.

8. Montagesystem für eine Airbag-Anordnung nach Anspruch 6, bei dem ein jeder zweite Durchgang (104) mit einem ersten Durchgang (129) ausgerichtet ist.

## Revendications

1. Système de montage d'un assemblage de coussin d'air, comprenant : un élément de fixation (70), comportant une plaque de base (72) avec un côté avant (76) et un côté arrière (78), un élément d'expansion élastique (90) le long du côté arrière (78) de la plaque de base (72), configuré de sorte à s'étendre à travers un passage (204) dans un élément structural (510) dans un véhicule, et à travers une partie d'un coussin d'air (200) ou d'une couverture de coussin d'air, de sorte à serrer le coussin d'air (200) ou la couverture du coussin d'air sur l'élément structural (510), entre le côté arrière (78) de la plaque de base (72) et l'élément structural (510), l'élément d'expansion élastique (90) étant agencé sur un côté opposé de l'élément structural (510), l'élément d'expansion élastique (90) comprenant deux attaches élastiques opposées (90a, 90b), comportant chacune une branche interne (100), s'étendant à partir de la plaque de base (72), et une branche externe (106), supportée de manière élastique par et configurée de sorte à constituer une extension de la branche interne (100), la branche externe (106) englobant, au niveau d'une extrémité distale, une surface d'engagement (122), adaptée pour s'engager dans un bord du passage (204) dans l'élément structural (510), chaque surface d'engagement (122) de chaque branche externe (106) étant configurée de sorte à assurer un rapprochement mutuel au cours de l'assemblage de l'élément de fixation (70) sur l'élément structural (510), pour établir une dimension réduite, permettant l'insertion de l'élément de fixation (70) dans le passage (204) dans l'élément structural (510) et l'adoption d'une position dégagée plus large que le passage (204) dans l'élément structural (510) lors de l'insertion dans celui-ci, **caractérisé en ce que** :
chaque branche externe (106) englobe près de la surface d'engagement (122) un premier passage (129), pour faciliter l'insertion d'une partie d'un outil de retrait (300) dans une direction allant du côté avant (76) de la plaque de base (72) dans l'élément structural (510), l'outil (300) étant adapté pour déplacer les branches externes (106) afin de les rapprocher.

2. Système de montage d'un assemblage de coussin d'air selon la revendication 1, dans lequel le passage (129) dans la branche externe (106) est constitué par une fente en V, une ouverture ovale ou une ouverture allongée.

3. Système de montage d'un assemblage de coussin d'air selon la revendication 1, dans lequel chaque branche externe (106) englobe près d'une extrémité distale des ailes en forme de coin repliées, passant au-dessus d'une branche interne correspondante (100) au cours de l'installation de l'élément de fixation (70).

4. Système de montage d'un assemblage de coussin d'air selon la revendication 3, dans lequel la plaque de base (72) englobe, en un point opposé au passage (129) dans la branche externe (106), un deuxième passage correspondant (104), adapté pour recevoir également une partie de l'outil de retrait (300).

5. Système de montage d'un assemblage de coussin d'air selon la revendication 4, dans lequel le deuxième passage est agencé dans la plaque de base (72) et s'étend à travers une partie de racine d'une branche interne respective (100).

6. Système de montage d'un assemblage de coussin d'air selon les revendications 4 ou 5, dans lequel l'outil de retrait (300) englobe des pointes courbées opposées de forme arquée (308, 310), pouvant être reçues dans l'un des deuxièmes passages (104) et ensuite dans l'un des premiers passages (129).

7. Système de montage d'un assemblage de coussin d'air selon la revendication 6, dans lequel l'outil de retrait (300) est configuré de sorte que lors de sa rotation sur un axe longitudinal, les pointes (308, 310) se rapprochent l'une de l'autre pour comprimer les branches externes (106) l'une contre l'autre.

8. Système de montage d'un assemblage de coussin d'air selon la revendication 6, dans lequel chaque deuxième passage (104) est aligné avec un premier passage (129).
